# EUROPEAN PATENT SPECIFICATION

(11) **EP 2 123 482 B1**
(45) Date of publication and mention of the grant of the patent: **05.12.2012**
(21) Application number: 07850959.3
(22) Date of filing: 20.12.2007
(51) Int. Cl.: B60C 9/18, B60C 9/22, B60C 13/00

(54) **PNEUMATIC TIRE FOR TWO-WHEELED VEHICLE**
LUFTREIFEN FÜR ZWEIRÄDRIGES FAHRZEUG
PNEU POUR VÉHICULE À DEUX ROUES

(30) Priority: 20.12.2006 JP 2006342546
(43) Date of publication of application: 25.11.2009
(73) Proprietor: Bridgestone Corporation, Tokyo 104-8340 (JP)
(72) Inventor: ISHIYAMA, Makoto, Tokyo 104-8340 (JP)
(74) Representative: Waldren, Robin Michael
(86) International application number: PCT/JP2007/074524
(87) International publication number: WO 2008/075737

(56) References cited:
- JP-A- 6 024 207
- JP-A- 6 143 923
- JP-A- 06 024 207
- JP-A- 06 143 923
- JP-A- 10 181 310
- JP-A- 2001 253 207
- JP-A- 2001 334 812
- JP-A- 2004 352 010
- US-A- 5 647 929

## Description

### Technical Field

The present invention relates to a pneumatic tire for a two-wheeled vehicle having high driving stability at high speed running and, more specifically, to a pneumatic tire that is optimized for two-wheeled vehicles in particular and which also has improved traction performance in deep cornering when the vehicle is tilted low.

### Related Art

There are cases in which high performance pneumatic tires for two-wheeled vehicles are greatly influenced by centrifugal force and prone to distension of the tire tread portion toward an outer side in the radial direction of the tire due to high-rotational velocity of the tire, which results in unfavorable driving stability. In order to prevent this, a tire structure has been developed in which reinforcing members (spiral members) of organic material fiber or steel are wound around at the tire tread portion so as to be substantially parallel to the tire equatorial plane. Nylon fiber, aromatic polyamide (Kevlar), steel and the like are used as reinforcing members that are wound in a spiral along the tire equatorial plane. Among these, aromatic polyamide (Kevlar) and steel have attracted attention since they are able to suppress distension of the tread portion without stretching even at high temperatures.

When these members are wound around the crown portion of a tire, it is possible to increase the so-called "hoop" effect (an effect whereby, similarly to the hoops around a tub), the crown portion of a tire is held down and the tire does not distend due to centrifugal force even when rotating at high speed, and thus exhibits high driving stability and endurance and, therefore, arrangement of spiral cords at the crown portion of a tire has been proposed on numerous occasions as disclosed, for example, Japanese Patent Application Laid-Open (JP-A) No. 2004-067059, JP-A No. 2004-067058, JP-A No. 2003-011614, JP-A No. 2002-316512 and JP-A No. 09-226319. Pneumatic tires for two-wheeled vehicles having these spiral members wound around them are known to have superior driving stability at high speed and extremely high traction performance.

However, as regards driving stability, in particular, turning performance when a vehicle (for example, a motorcycle) is tilted low, it cannot be said that the driving stability has been dramatically improved simply because reinforcing members (spiral members) have been wound around. There is demand from, for example, riders for improvement of tire grip when a motorcycle is tilted low.
JP-A-6-24207 describes a known radial tire for a motorcycle.

### Disclosure of the Invention

### Subject to be addressed by the Invention

In view of the above circumstances, the present invention addresses the provision of a pneumatic tire for a two-wheeled vehicle having further increased driving stability, particularly in turning.

### Means for Addressing the Subject

The present inventors conducted the following research so as to address the subject of the present invention.
Because two-wheeled vehicles are turned by inclining the vehicle body, a position at the tread portion of a pneumatic tire which contacts the ground differs when advancing in a straight line and when turning. That is, when advancing in a straight line, the central portion of the tread portion is used and, when turning, an edge portion of the tread portion is used. As a result, the shape of the tire is extremely rounded as compared to a passenger vehicle tire. Owing to this rounded crown shape of the tire tread portion, the following unique characteristics can be observed, particularly during turning.

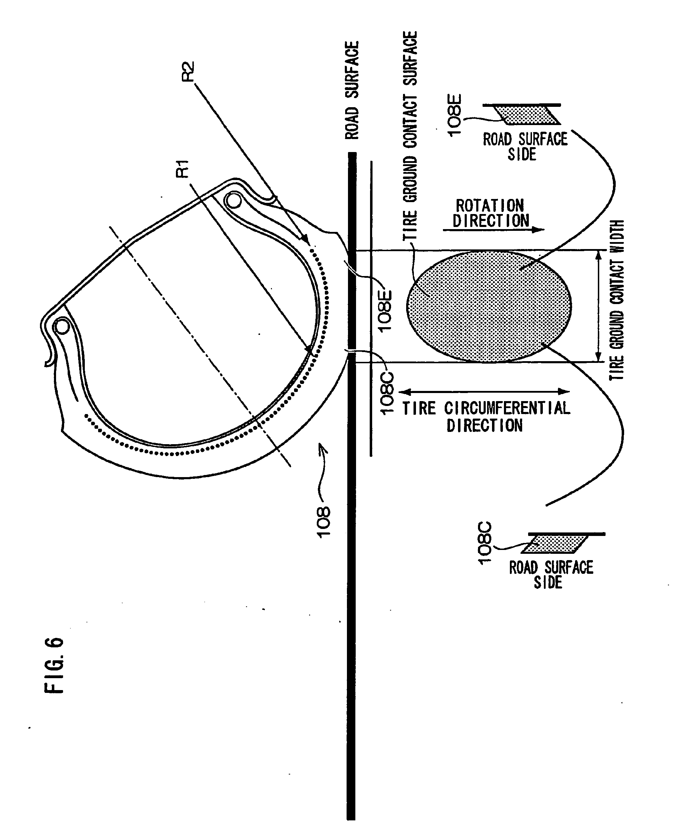

In pneumatic tires for two-wheeled vehicles, in terms of turning performance, particularly when the vehicle body is tilted low, an edge portion at one side in a width direction of the tire tread contacts the ground and grip force is generated. When the vehicle body is tilted low while being turned, a state of contact with the ground as shown in Fig. 6 is achieved. When the ground contact configuration at this time is considered, as shown in Fig. 6, deformation of ground contact portions of the tread portion differs each other between the portions near to the center of the tread and the portion near to the tread edge. Observing the deformation of the tread portion in the direction of tire rotation (also called the tire circumferential direction or the tire front-rear direction), the deformation is occurred in a driving state at tread portion 108C at the center side and the deformation is occurred in a braking state at tread portion 108E at the tread edge side.

Here, the driving state is shear state in which the deformation of the tread portion occurs at the instant that drive force is applied to the tire, and the deformation is such that, when a tire is viewed in a cross section along the equatorial plane, the tread lower portion (the surface contacting the frame member inside the tire) is subject to a force sheared in a reverse direction of tire travel, and the tread surface in contact with a road surface is deformed in a forward direction of tire travel,. On the other hand, the braking state is the reverse of the driving state and, the braking state is shear state which is the behavior of the tire at the moment of braking. The tread deformation is a shear state in which the tread lower portion or the internal side of the tire (a belt portion) is subject to a force sheared in a forward direction of tire travel, and the tread surface in contact with the road surface is deformed in a reverse direction of tire travel,. As shown in Fig. 6, when turning at a large angle of inclination such as a camber angle of 45°, even during rotation in a state in which neither driving force or braking force are applied to the tire, the deformation in the driving state is exhibited in the ground contact portion at the tread center side and the deformation in the braking state is exhibited at the tread edge side. This is due to differences in the radius (radial difference) of the tire belt portion. In a pneumatic tire for a two-wheeled vehicle, because the crown portion of the tire is very rounded, there is a large difference between the distance from the rotational axis to the belt at the tread center portion and at the tread edge portion. In the case shown in Fig. 6, the radius R1 at a center side position of the ground contact portion is clearly larger than the radius R2 at a tread edge side position of the ground contact portion. Since the angular velocity at which the tire rotates is the same, the velocity of the belt portion (when the tire is in contact with the road surface, this is referred to as the tire circumferential velocity along the road surface, and is found by multiplying the belt radius with the tire angular velocity) is larger at the portion with the larger radius R1. While the tire tread surface is not subject to sheared force in a front-rear direction at the instant of contact with the road surface, it is subject to shear deformation in a front-rear direction as it advances in conjunction with rotation of the tire in contact with the road surface and when it separates from the road surface. At this time, driving state shear deformation is generated at tread portion 108C at the tire center side which has a higher belt portion velocity, and braking state shear deformation is generated at the tread edge side of the tire (tread portion 108E at the tread edge portion side) because the belt portion velocity is lower. This constitutes the deformation state in a front-rear direction of tread portion 108.

As a result of this excessive deformation during turning, uneven wear tends to caused at the tire shoulder portion. Further, since shear deformation is caused at the tread in opposite front and rear directions, superfluous performance is included and waste is generated in the tire grip force at the time of turning. Ideally, if deformation of the tread portion contacting the ground all exhibits the same behavior, grip force is maximized; however, there are cases when grip force is not generated at certain locations in contact with the ground since unnecessary deformation is generated as above. For example, when drive force is applied to the tire in its inclined state and accelerated, driving grip force is immediately exhibited at tread portion 108C at the center side, which is already in the driving state; however, at tread portion 108E at the tread edge side, which is already in the braking state, because the deformation in the breaking state first returns to neutral and then shifts to the deformation in the driving state, it is difficult to impart driving force. A large traction force is required to shift the edge-side tread portion 108E to a driving state, and if the accelerator is opened in order to increase the traction force and drive force applied, the tread at the tire center side, which has been in the driving state, is susceptible to slipping.

With respect to this situation, it is thought that if the tread deformation of the tire shoulder portion (the edge-side tread portion), which is originally at the braking state, can be even slightly shifted in advance toward the driving state, it will also be possible to exert a large amount of traction force at the tread edge portion. To this end, one method of solving this would be to increase the velocity of the belt portion at the tread edge side; however, since the belt portion velocity is determined by the belt radius as discussed above, excessive enlargement of the belt portion radius would preclude use as a pneumatic tire for a two-wheeled vehicle.

It may, however, be possible to increase the belt portion velocity by adopting a configuration for the tread edge portion whereby the belt is able to stretch in the tire circumferential direction after contact with the ground. That is, at a time of turning with a large camber angle (hereinafter, a "time of large camber"), if a configuration is adopted whereby, in the contact portion of the tread, the center side half portion of the belt does not stretch in the tire circumferential direction (equatorial direction) and the tread edge side half portion of the belt can stretch in the tire circumferential direction, the belt portion velocity at the tread edge side increases due to the belt at the tread edge side stretching after contact with the ground, and the deformation in the breaking state at the tread edge side can be suppressed. Accordingly, the traction performance at a time of large camber (acceleration performance from a turn in which a bike is greatly inclined) is improved.

In conventional techniques, it is performed to wind a spiral belt layer around the entire tread region. With this kind of tire, it is not possible to stretch the belt at the tread shoulder portion in the tire circumferential direction. However, if the spiral belt is not wound in the vicinity of the tread edge portion and is only arranged at the center side, the belt portion velocity at the tread edge side increases at a time of large camber and it is possible to improve traction performance. Further, increasing the belt portion velocity at the tread shoulder portion at a time of large camber brings it closer to the belt portion velocity at the tread center side, as a result of which, superfluous performance at the tread portion in contact with the ground is suppressed. That is, tread portions which had previously been subject to shear force in the reverse direction changes to be subjected to shear force in the same direction, superfluous performance can be eliminated, and the occurrence of uneven wear suppressed. Further, since a spiral belt layer is arranged at the tread center portion, tire distension due to centrifugal force during high-speed travel (since the speed is high, this refers to a time at which a vehicle (motorcycle or the like) is upright) can be suppressed, as a result of which, driving stability at high speed is maintained just as with a tire having a spiral belt layer across its entire breadth.

The present inventors conducted experiments and further research in addition to the above research, and proceeded to complete the present invention.
The first aspect of the invention is a pneumatic tire for a two-wheeled vehicle having a belt layer and a tread portion sequentially arranged at an outer side in a tire radial direction of a crown portion of a carcass formed from at least one layer and spanning toroidally between a left-and-right pair of bead cores, the belt layer further including at least one spiral belt layer formed by spirally winding a band-like rubber coated cord layer, which is formed from one cord or plural cords arranged in parallel embedded in a coating rubber, so as to form a cord angle in a range of from 0° to 5° relative to a tire circumferential direction, in which, when L is a tread surface distance in the tire width direction from a tire center to a tread edge, the spiral belt layer is present only in a range up to a position from 0.65L to 0.85L from the tire center, and an intersecting belt ply is present in at least a portion in a range from an edge portion in the tire width direction of the spiral belt layer to the tread edge, the intersecting belt ply consisting of belt layers including organic material fiber cords that intersect each other and have a cord angle of from 30° to less than 75° relative to the tire circumferential direction.

The range of 0° to 5° of the cord angle in the spiral belt layer relative to the tire circumferential direction was set in consideration of manufacturing tolerance.
Further, in the first aspect, the width of the spiral belt layer is specified. L is the width of one half of the tread surface. That is, L is the distance in the tire width direction from the tire center to the tread edge along the tire surface. Here, the width of the spiral belt layer is specified as in a range of from 0.65L to 0.85L from the tire center. That is, at either tread edge side, the spiral belt layer is not present in a range of from 0.35L to 0.15L from the tread edge.

The justification for specifying the width of the spiral belt layer to from 0.65L to 0.85L is based on consideration of the ground contact portion at a camber angle in the vicinity of 50° when the bike is tilted as low as possible. When turning at a camber angle of 50°, only a width portion of from 0.4L to 0.5L of the entire tread width 2L is in contact with the ground. In the first aspect, as described above, the configuration is such that, at the tread center portion, the spiral belt layer is formed and the frame member in the ground contact portion can be prevented from stretching in the tire circumferential direction at a time of large camber and, conversely, at the tread edge portion side, the spiral belt layer is not formed and the frame member can be stretched in the tire circumferential direction. It is preferable to arrange the edge portion of the spiral belt layer in a vicinity position where half in the height of the ground contact portion is located. The position is apart from the tread edge by 0.2L to 0.25L. However, this does not need to be exactly half in the height of the ground contact portion, and the effect is achieved if the spiral belt is not wound at the r tread shoulder side at the ground contact portion. For this reason, the range is set at from 0.65L to 0.85L for the spiral belt layer.

When the width of the spiral belt layer is less than 0.65L, the belt portion stretches even at the tire center side of the ground contact portion at a time of large camber, the belt portion velocity also increases at the center side, and it becomes more difficult to achieve the effect of the invention. When the width of the spiral belt layer exceeds 0.85L, the belt portion is inhibited from stretching at the shoulder side of the ground contact portion at a time of large camber, the belt portion velocity at the shoulder portion cannot be increased, and it becomes more difficult to achieve the effect of the invention.
The width of the spiral belt layer is preferably in the range of 0.7L to 0.8L and more preferably in the range of 0.75L to 0.8L.

Further, in the first aspect, the presence of an intersecting belt ply in at least a portion of both left and right side shoulder portions, which have a width of 0.15L to 0.35L and at which the spiral belt layer is not formed, is specified. If the intersecting belt ply is not present at that portion, the in-plane shear rigidity of the belt is reduced, the belt is excessively weak, and grip force when turning is easily reduced. Further, high rigidity can be maintained at the tread center portion as the spiral belt is wound therefore, there are no problems even if the intersecting belt ply does not exist at the center portion.

Further, in the first aspect, the cord angle of the belt layers of the intersecting belt ply is set at from 30° to less than 75° relative to the tire circumferential direction. If the cord angle is less than 30° relative to the tire circumferential direction (equatorial direction), the angle approaches that of the spiral belt layer, resulting in inhibiting stretching of the intersecting belt in the tire circumferential direction (equatorial direction). In such a case, conversely to the purpose of the invention of stretching the belt at the ground contact portion of the shoulder portion in the equatorial direction, the frame member at the tread shoulder is inhibited from stretching in the equatorial direction and it becomes difficult to increase the belt portion velocity at the tread shoulder. Accordingly, the deformation in the braking state is maintained at the tread shoulder portion and traction grip is impaired and, in addition, uneven wear is liable to occur. Further, if the cord angle of the belt layer of the intersecting belt ply exceeds 75°, a sufficient intersection effect, that is an effect whereby the in-plane shear rigidity of the belt is increased by superimposing belts having mutually opposite directions, cannot be achieved by the intersecting belf ply the in-plane shear rigidity of the intersecting belt ply is insufficient, and sufficient grip cannot be obtained when turning. In addition, the angle is preferably 45° or more as this facilitates stretching of the frame member in the equatorial direction. Further, the angle is preferably 70° or less in view of realization of in-plane shear rigidity.

Further, the cords included in the intersecting belt ply disposed at the shoulder portion are organic material fiber cords. This is because when cords such as steel cords, which also maintain rigidity in the compression direction of the cord, are arranged as the intersecting ply layer, the frame member is hard to be deformed outside, the ground contact portion becomes smaller, and grip force is reduced. With organic material fiber cords, the rigidity in the compression direction of the cord is small and the ground contact portion enlarged while antiplane rigidity of the frame member can be reduced. Because extremely robust rigidity is maintained in the cord tension direction, in-plane rigidity can be effectively increased.

Note that the material of the cords constituting the spiral belt layer may be steel or organic material fiber. This is because there is no risk that the antiplane bending rigidity of the belt will be increased more than necessary as the spiral belt layer is not intersecting. When a belt is made to intersect as at the shoulder portion, use of steel cords should be avoided. The material of the intersecting belt ply is preferably a fiber having high tensile rigidity and heat resistance such as aromatic polyamide (product name: Kevlar).

Further, the carcass (body ply, carcass ply) is at least one layer. In the case of one layer, it is usually disposed in a direction at an angle of 90° to the tire circumferential direction, that is, in the tire radial direction. In the case of two layers, two sheets may be layered in the radial direction, or they may be disposed at an angle of 70° relative to the tire circumferential direction so as to mutually intersect. Further, the method of engagement with the carcass bead portion may be done by winding around the bead core and folding back, or engagement by cutting the carcass at the leading end of the beads, disposing bead wire at both sides of the cord end portions, and nipping the carcass between the bead wires.

The second aspect of the invention has a belt reinforcement layer including organic material fiber cords having a cord angle in a range of from 85° to 90° relative to the tire circumferential direction and having a width of at least 90% of the entire tread width 2L, provided between the spiral belt layer and the tread portion.
In the second aspect, it is specified that organic material fiber members forming an angle of from 85° to 90° relative to the tire circumferential direction (equatorial direction) are provided at an outer side in the tire radial direction of the spiral belt layer. Because in the tread portion, there are portions at which the spiral belt layer is present and the spiral belt layer is not present, the rigidity of the tire frame member changes at the boundary of these portions. A rider may feel a step (ridge) in the tire and a sense of discomfort when the edge of ground contact portion crosses over the boundary (that is, when the ground contact portion moves and crosses over this boundary when the tire is tilted lower and lower when turning). The rigidity of the cords of internal belts and the like is significantly higher than the tread rubber. As a result, when there is a discontinuous portion in the internal frame member, the rider may feel a step. Therefore, as with the second aspect, a rider can be inhibited from feeling a step by making the outermost belt layer continuous from the tire center to the tire shoulder. As the most effective way of preventing the rider from feeling the step, it is preferable to provide cords along the tire width direction (that is, in a direction forming an angle of 90° relative to the tire circumferential direction). The range of from 85° to 90° relative to the tire circumferential direction (equatorial direction) in the second aspect was set in consideration of manufacturing tolerance.

Further, the width of the belt reinforcement layer is at least 90% of the entire tread width 2L. The reason for providing the belt reinforcement layer is to prevent the step sensation described above, that is, to ensure that there is no disjuncture in the belt in the outermost layer by covering the edge portion of the spiral belt layer with the belt reinforcement layer. Therefore, it is more preferable to make the belt reinforcement layer wider and to arrange it so as to cover the entire tread region; however, if the width is at least 90% the step in the spiral belt layer can be covered to a sufficient extent. In addition, while the upper limit is not specified in the second aspect, the width may extend beyond the entire tread width into the side wall portion. That is, the width may be 110%. Preferably, the upper limit is 110%, which does not extend the entire width of the side wall portion, and 105% is more preferable.

Here, the entire tread width refers to the tread portion peripheral direction width. The tread portion peripheral direction width is the width in a substantially circular arc direction across the outer periphery of the tread portion, and is the width of the region that contacts the ground during travel at a camber angle (CA).

Further, in the second aspect, the material of the cords constituting the belt reinforcement layer is organic material fiber. This is because since the cross section of a pneumatic tire for a two-wheeled vehicle is extremely rounded, if steel cords, which have rigidity with respect to the tire width direction, that is, with respect to the compression direction of the cords, are used, the tire becomes more resistant to yielding and the ground contact area decreases. The rigidity of organic material fiber cords at the cord compression direction is low, and there is hardly any possibility of reducing the ground contact area. The organic material fiber cords are, for example, aromatic polyamide or nylon cords.

In addition, since the presence of the belt reinforcement layer enables elimination of the step at the edge portion of the spiral belt layer, it is not desirable for the diameter of the cords to be excessively small. Further, conversely, it is not desirable for the diameter of the cords to be excessively large as this results in rigidity with respect to the cord compression direction, organic material fiber notwithstanding. Accordingly, the diameter of the organic material fiber cords constituting the belt reinforcement layer is preferably from 0.5 mm to 1.5 mm.

In the third aspect of the invention, the intersecting belt ply has a width of at least 90% of the entire tread width 2L and is provided between the spiral belt layer and the tread portion so as to contact the spiral belt layer.
The organic material fiber cords included in the intersecting belt ply are, for example, aromatic polyamide or nylon cords.
In the third aspect, a configuration is specified in which a wide intersecting layer (second intersecting belt ply is arranged at an outer side in the tire radial direction of the spiral belt layer. Arrangement of the intersecting ply at an outer side in the tire radial direction (outer side in the direction of the radius) of the spiral belt layer in this way enables further inhibition of a rider from feeling a step at the edge portion of the spiral belt layer as discussed above.

The fourth aspect of the invention has a cord member including organic material fiber or steel cords having a cord angle in a range of from 0° to 20° relative to the tire circumferential direction provided in a side wall portion in a range of from 20% to 100% of the side wall height.
In the fourth aspect, the side wall portion of the tire is specified. In the present invention, the spiral belt is not wound at the tread shoulder portion. As a result, the tire shoulder portion is susceptible to distension due to centrifugal force at high velocity rotation. If, as in the invention described in the fourth aspect, a cord member having a cord angle in a range of from 0° to 20° relative to the tire circumferential direction (equatorial direction) is provided in the side wall portion, the side wall portion becomes more resistant to distension due to centrifugal force. With respect to the tread shoulder portion, since the cord member that inhibits distension is disposed at both sides thereof, distension due to centrifugal force can be prevented. That is, with respect to the tread shoulder portion at which the spiral belt is not wound, while the spiral belt inhibits distension at the tire center side, the cord member prevents distension due to centrifugal force at the tread edge portion side. When this cord member is not provided at the side wall portion, the spiral belt layer only serves as a member inhibiting centrifugal force distension at the tire center side ; however, when the cord member is provided at the side wall portion, distension of the shoulder portion is also prevented. That is, distension can be prevented at both the center and the sides of the tread. With tires for two-wheeled motor vehicle races and the like, it is common for speeds of 150 km/h to be reached at a time of large camber, and the invention described in the fourth aspect is particularly preferable at such times.

### Effects of the Invention

According to the present invention, a pneumatic tire for a two-wheeled vehicle having further increased driving stability, particularly in turning, can be realized.

### Brief Description of the Drawings

Fig. 1 is a sectional view in the tire radial direction of a pneumatic tire for a two-wheeled vehicle described according to an exemplary embodiment of the present invention and in Example 1;
Fig. 2 is a sectional view in the tire radial direction of a pneumatic tire for a two-wheeled vehicle according to Example 3;
Fig. 3 is a sectional view in the tire radial direction of a pneumatic tire for a two-wheeled vehicle according to Example 4;
Fig. 4 is a sectional view in the tire radial direction of a pneumatic tire for a two-wheeled vehicle according to Example 5;
Fig. 5 is a sectional view in the tire radial direction of a pneumatic tire for a two-wheeled vehicle according to a conventional example;
Fig. 6 is an explanatory diagram showing a state of contact with the ground of a pneumatic tire for a two-wheeled vehicle; and
Fig. 7 is an explanatory diagram explaining forces measured in test examples.

### Best Mode for Practicing the Invention

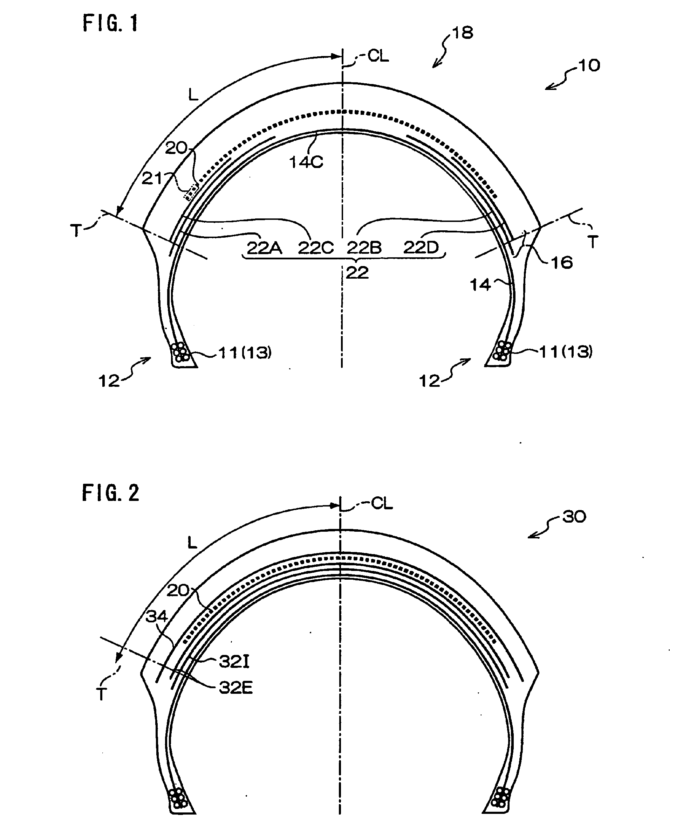

In the following, embodiments of the present invention are explained with reference to exemplary embodiments. As shown in Fig. 1, pneumatic tire 10 for a two-wheeled vehicle according to an exemplary embodiment of the present invention is provided with a pair of bead portions 12, one on the left and one on the right, and a carcass 14 extending toroidally from the bead portions 12.

Carcass 14 stretches toroidally between bead cores 11 of bead portions 12. Carcass 14 may be a single layer or plural layers. When carcass 14 is two layers (i.e., when it consists of two sheets of ply), the cords forming carcass 14 may be oriented in a radial direction (a direction at an angle of 90° to the tire circumferential direction), or may be given a bias configuration using plies disposed in intersecting directions having cord angles within a range of 45° to 80° relative to the tire circumferential direction. The end portions of a carcass ply (body ply) are engaged with bead cores 11 and are nipped from both sides by bead wires 13.

Further, pneumatic tire 10 for a two-wheeled vehicle has belt layer 16 and grooved tread portion 18 sequentially arranged on the outer side, in a radial direction of the tire, at crown portion 14C of carcass 14. Belt layer 16 has spiral belt layer 20. Spiral belt layer 20 is formed by spirally winding band-like rubber-coated cord layer 21, which is formed from one cord or plural cords arranged in parallel embedded in a rubber coating, so as to form a cord angle in the range of 0° to 5° relative to the circumferential direction of the tire. With L the tread surface distance from tire center CL to tread edge T, spiral belt layer 20 is present only up to positions that are in the range of 0.65L to 0.85L from the tire center CL.

Further, intersecting belt ply 22 consisting of belt layers 22A, 22B, 22C and 22D, which includes organic material fiber cords intersecting with each other and having a cord angle of from 30° to less than 75° relative to the circumferential direction of the tire, is present in at least a portion in the range from the edge in a width direction of spiral belt layer 20 to tread edge T.

Spiral belt layer 20 is formed by spirally winding steel cords formed from steel monofilaments plied in a 1 x 3 arrangement. A method of manufacture is used whereby a band-like body, in which two cords arranged in parallel are embedded in coating rubber, is wound in the direction of the tire rotational axis and the winding is proceeded in a spiral along a substantially tire equatorial direction (a substantially tire circumferential direction).
Predetermined grooves are provided in tread portion 18. Further, as with tires' for racing or the like, it is acceptable if grooves are not provided.

In this way, in the present embodiment, the width of spiral belt layer 20 is regulated such that spiral belt layer 20 is present only in the range of 0.65L to 0.85L from the tire center CL. Further, intersecting belt ply 22 is present in at least a portion in the range from the edge in a width direction of spiral belt layer 20 to tread edge T and includes organic material fiber cords intersecting with each other and having a cord angle of from 30° to less than 75° relative to the circumferential direction of the tire.

Thus, when turning in which tire large camber happens, a tread portion in the vicinity of the tread edge portion is the ground contact portion. Accordingly, in addition to the configuration being such that the frame member can be stretched in the tire circumferential direction in the tread portion at which spiral belt layer 20 is not formed, the frame member is prevented from stretching in the tire circumferential direction within the ground contact portion in the tread portion at which spiral belt layer 20 is formed.

As a result, pneumatic tire 10 for a two-wheeled vehicle, with which high driving stability can be maintained during high speed travel and driving stability (traction performance) when turning with the vehicle body tilted low has been improved, can be provided. Further, wear of the shoulder portion can be suppressed.

### Test Examples

In order to confirm the effects of the present invention, the inventors carried out performance tests and evaluated the performance with respect to each of seven examples of the pneumatic tire for a two-wheeled vehicle according to the present invention (referred to as Examples 1-7 below), each of two comparative examples of a pneumatic tire for a two-wheeled vehicle (referred to as Comparative Examples 1 and 2 below), and one example of a conventional pneumatic tire for a two-wheeled vehicle (referred to as the Conventional Example below).

The size of each of the tires is 190/50ZR17. In each tire, cords used with a spiral belt layer (spiral reinforcement layer) are made of steel. In each tire, the tread portion was not provided with grooves.

### Conventional Example

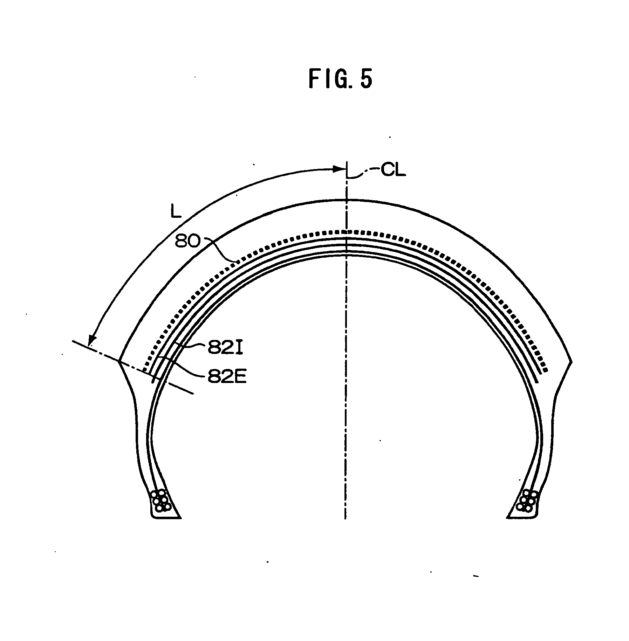

The Conventional Example is a tire having the structure shown in Fig. 5. The width of spiral belt layer 80 is 240 mm, which is the same as the entire width of the tread (2L).
At a tire radial direction inner side of spiral belt layer 80 are provided two intersecting belts 82I and 82E. The cords of intersecting belts 82I and 82E are provided at an angle of 65° relative to a circumferential direction (equatorial direction) of the tire; and include Kevlar (aromatic polyamide) fibers plied to a diameter of 0.7 mm, with 50 cords laid per 50 mm. The first intersecting belt 82I (in the following explanation, the belt at a radial direction inner side is a first belt) is 240 mm wide. The second intersecting belt 82E is 230 mm wide. There is a 5 mm difference between the ends of both belts.

### Example 1

Example 1 is a pneumatic tire for a two-wheeled vehicle having the structure shown in Fig. 1. Spiral belt layer 20 is 180 mm wide (the width of one side thereof from the tire equatorial plane being 90 mm), which is 0.75 times the entire width of the tread 2L. Spiral belt layer 20 is formed by spirally winding steel cords plied from 1 x 3 steel monofilaments each having a diameter of 0.18 mm, with 60 cords laid per 50 mm.

At an inner side of spiral belt layer 20 are two pairs of left and right symmetrical intersecting belts 22A-22D (intersecting belts 22A and 22C are one pair, and intersecting belts 22B and 22D are another pair). First intersecting belts 22A and 22B are each 80 mm wide, and tire width direction outer ends thereof extend 5 mm from tread end T toward a tire outer side. Second intersecting belts 22C and 22D are each 50 mm wide, and tire width direction outer ends thereof are at the same position as tread edge T. The first intersecting belts and the second intersecting each other while the cord being disposed at an angle of 45° relative to a tire circumferential direction (equatorial direction). Intersecting belts 22A-22D are made of Kevlar (the cord angle of intersecting belts 22A-22D differs from the Conventional Example).

The present example uses one carcass ply in which the cord direction is a radial direction (a direction intersecting a tire circumferential direction at 90°). Cords of carcass 14 are made of nylon. The thickness of tread portion 18 is 7 mm.

### Example 2

Example 2 has a configuration in which one reinforcement belt (the same as reinforcement belt 34 described in Example 3 below) is added at a radial direction outer side of spiral belt layer 20 of Example 1 (see Fig. 1), at an angle of 90° relative to the tire circumferential direction. The added reinforcement belt is 240 mm wide, and is made from an aromatic polyamide. The material of the reinforcement belt is the same as that of conventional intersecting belts 82I and 82E, and the manner of laying the cords and the diameter of the cords are also the same; however, the cord angle thereof is 90°, which is different from the Conventional Example.

### Example 3

Example 3 is a pneumatic tire 30 for a two-wheeled vehicle having the structure shown in Fig. 2. Example 3 includes the above spiral belt layer 20 and intersecting belts 32I and 32E similar to the Conventional Example. That is, first intersecting belt 32I is 240 mm wide, second intersecting belt 32E is 230 mm wide, and each has a cord angle of 65° relative to a tire circumferential direction. Similar to the other examples, the width of spiral belt layer 20 is 180 mm, which is different from spiral belt layer 80 of the Conventional Example. At a radial direction outer side of spiral belt layer 20 is a reinforcement belt 34 having a cord angle of 90°, similar to Example 2. Reinforcement belt 34 is 240 mm wide, the same as in Example 2. The cords of reinforcement belt 34 are made of Kevlar.

### Example 4

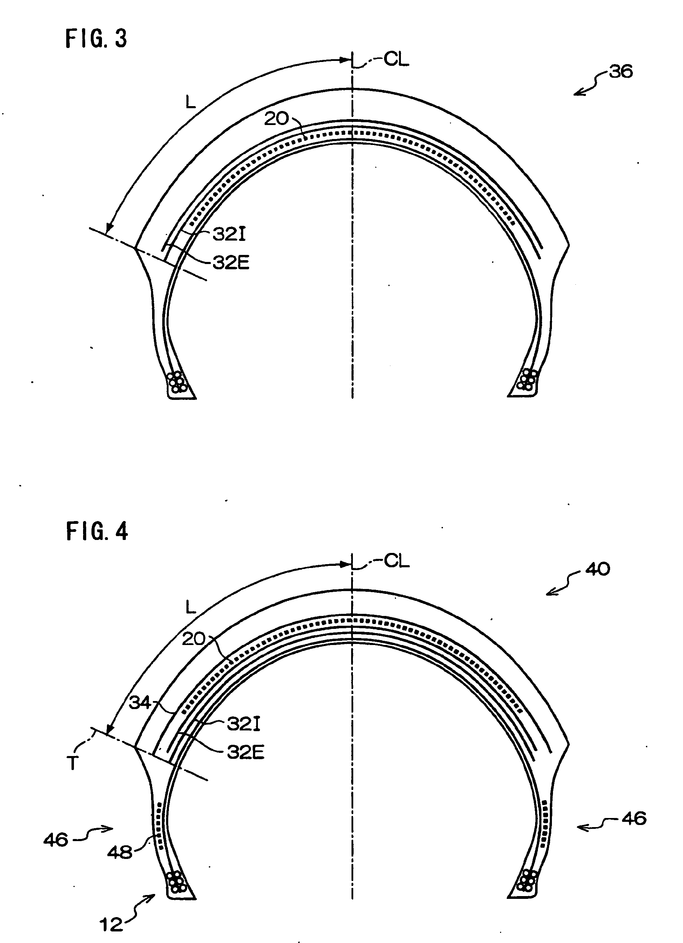

Example 4 is a pneumatic tire 36 for a two-wheeled vehicle having the structure shown in Fig. 3. The positions of intersecting belts 32I and 32E and spiral belt layer 20 used in Example 3 are reversed, and reinforcement belt 34 having a cord angle of 90° (see Fig. 2) is removed. First intersecting belt 32I is 240 mm wide, second intersecting belt 32E is 230 mm wide, and cords of both intersecting belts are made of Kevlar. The number of cords per unit width and the cord types are the same as in the other examples. Spiral belt layer 20 is 180 mm wide. As a result, intersecting belts 32I and 32E are positioned at an outermost layer of the belt instead of reinforcement belt 34, and intersecting belts 32I and 32E cover portions where the spiral belt layer 20 is not provided (step portions).

### Example 5

Example 5 is a pneumatic tire 40 for a two-wheeled vehicle having the structure shown in Fig. 4. In contrast with Example 3, a cord member 48 (narrow width member) is provided at side wall portion 46, having a Kevlar spiral wound in the same direction as a tire circumferential direction, similar to spiral belt layer 20. Cord member 48 provided at side wall portion 46 is 20 mm wide and 20 cords of plied Kevlar 0.7 mm in diameter are laid within the 20 mm width. Cord member 48 is positioned near to where the tire is widest; specifically, positioned symmetrically to the left and right at a central position of the height of side wall portion 46.

### Example 6

Example 6 has a basic structure similar to Example 3, except that the width of a spiral belt layer is different, being 160 mm (the width of one side being 80 mm). This is 0.667 (2/3) times the width of the entire width of the tread 2L (240 mm).

### Example 7

Example 7 has a basic structure similar to Example 3, except that the width of a spiral belt layer is different, being 200 mm (the width of one side being 100 mm). This is 0.833 times the width of the entire width of the tread 2L (240 mm).

### Comparative Example 1

Comparative Example 1 has a basic structure similar to Example 3, except that the width of a spiral belt layer is different, being 140 mm (the width of one side being 70 mm). This is 0.583 times the width of the entire width of the tread 2L (240 mm).

### Comparative Example 2

Comparative Example 2 has a basic structure similar to Example 3, except that the width of a spiral belt layer is different, being 210 mm (the width of one side being 105mm). This is 0.875 times the width of the entire width of the tread 2L (240 mm).

### Test Method and Evaluation Results

In the present test examples, in order to evaluate the extent of desired improvements in traction performance when a vehicle body is tilted, measurement and testing was performed in the following manner using a drum.

All tires of the present test examples were fitted to a standard rim, at an internal tire pressure of 240 kPa. The standard rim is of an applicable size as defined in the 2006 Year Book of the Japan Automobile Tire Manufacturers Association Inc. (JATMA). As a device used in the testing, sandpaper was pasted to a drum 3 meters in diameter, and the sandpaper was made to resemble a road surface. The drum was then rotated at a speed of 150 km/h, and a tire was pressed to the sandpaper from above the drum at a camber angle of 50° under a weight of 150 kgf. In the present test examples, a chain that transmits motive force to a rotational axis was attached to the tire, such that it was possible to apply drive force. In the present examples, a motor was used to apply driving force.

In the present example, a tire was rotated at 150 km/h and, by applying driving force, the tire was accelerated linearly within 3 seconds to 180 km/h. At this time, since the drum is rotating at 150 km/h, a driving force is applied to the tire, and traction can be measured in a state in which a vehicle is tilted. The force acting on the tire is read by a force sensor provided at the center of the wheel of the tire.

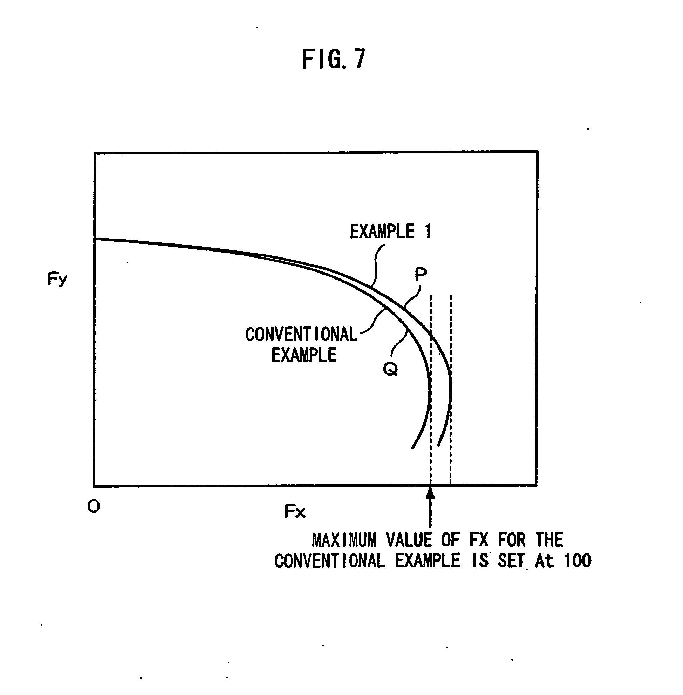

When this force is drawn on a graph with a horizontal axis Fx (a force that operates in a direction parallel to a tire travel direction) and a vertical axis Fy (a force that operates in a direction orthogonal to a tire travel direction), the waves P and Q shown in Fig. 7 are obtained. The waves P and Q are called friction ellipses. When Fx = 0, the intercept of Fy indicates a pure lateral force at a driving force of 0, and this force is called camber thrust. In the present test examples, the grip performance of the tire in a traction state is evaluated by applying a driving force to the tire and speeding up the revolutions of the tire. As time passes, the Fx value of the graph waves move in a positive direction. The maximum value of Fx is an indicator of traction grip.

In the present test examples, the maximum value of Fx of the Conventional Example is set as an index value of 100, and the performance (traction performance) of the other tires was evaluated by an index number representing a relative evaluation. The results of the evaluation are shown in Table 1.

**Table 1**

| | Tire Type | | | | | | | | | |
|---|---|---|---|---|---|---|---|---|---|---|
| Test Type | Conv. Ex. | Ex. 1 | Ex. 2 | Ex. 3 | Ex. 4 | Ex. 5 | Ex. 6 | Ex. 7 | Comp. Ex. 1 | Comp. Ex. 2 |
| Traction performance by drum | 100 | 107 | 108 | 108 | 108 | 110 | 104 | 104 | 101 | 102 |
| Traction performance at low speed corner | 4 | 8 | 8 | 8 | 8 | 9 | 7 | 7 | 4 | 5 |
| Traction performance at high speed corner | 4 | 7 | 8 | 8 | 8 | 10 | 7 | 7 | 4 | 5 |
| Lane change performance at high speed | 9 | 8 | 8 | 9 | 9 | 9 | 9 | 9 | 9 | 9 |
| Series performance during turning | 8 | 6 | 8 | 8 | 8 | 8 | 8 | 8 | 8 | 8 |
| Wear amount after travel | 10 | 6 | 5 | 5 | 5 | 5 | 7 | 7 | 9 | 9 |

Next, driving performance comparison tests using actual vehicles were conducted. Since the above tires (Examples 1-7, Comparative Examples 1 and 2, and the Conventional Example) are rear tires, a conventional tire was used for a front tire, and only the rear tire was changed in the tests using an actual vehicle. The method of testing and evaluation is as follows.

The above test tires (Examples 1-7, Comparative Examples 1 and 2, and the Conventional Example) were fitted to a 1000 cc sports-type two-wheeled vehicle, which was actually driven on a test course, and driving stability (cornering performance) was given an overall evaluation by a test rider according to a ten point scale based on the rider's impression. The two-wheeled vehicle was driven on the course in a demanding manner such as in a two-wheeled vehicle race, and reached a maximum speed of 220 km/h.

The evaluation includes the following four sections. The evaluation results are shown in Table 1.
(1) Traction performance at a low speed corner (acceleration performance of the vehicle when at a speed of 50 km/h and tilted very low)
(2) Traction performance at a high speed corner (acceleration performance of the vehicle when at a speed of 150km/h and tilted very low)
(3) High-speed lane change performance (driving stability at 200 km/h). Lane change refers to driving when a driving lane on an expressway or the like is switched. Driving stability in response to minor input when driving straight at high speed and the like can be evaluated from this test.
(4) Series performance when a motorcycle is tilted during turning (i.e., performance exhibiting no unusual behavior when the vehicle is tilted)

The state of uneven wear of a tire shoulder portion was also evaluated after 10 circuits of the test course. Specifically, the wear amount of a tire shoulder portion was measured, the wear amount of the Conventional Example was set as an index number of 10, and the wear amounts of each of the other tires was evaluated relatively and respective index numbers were obtained. These index numbers are shown in Table 1. A smaller wear amount indicates less wear and more favorable performance.

The inventors reached the following conclusions based on the above results. In Example 1, at an outermost layer of belt layer 16, since there is no reinforcement belt 34 (see Fig. 2) having a cord angle of 90° relative to a tire circumferential direction, a step at an edge portion of spiral belt layer 20 is felt by a rider, resulting in a poor evaluation. In Example 4, there is no reinforcement belt 34, but since intersecting belts 32I and 32E having a broad width are provided at the outermost layer, the step is not felt, and there are substantially no problems.

Example 5 was excellent in terms of high-speed traction performance. It is thought that this is because a spiral cord member 48 is provided at a side wall portion, which prevents expansion of the tire due to centrifugal force.

The evaluation result of high-speed lane change performance was the same for each tire. Since even the Conventional Example had a spiral belt, it had excellent performance. Further, the reason that the lane change performances of Example 1 and Example 2 were somewhat poorer is thought to be because in Example 1 and Example 2, an intersecting belt ply is not provided at a center portion of a belt layer, and only a spiral belt layer is provided.

Examples 6 and 7 did not exhibit a significant improvement in traction performance. However, compared to the Conventional Example, there was a definite improvement in traction performance. Comparative Examples 1 and 2 exhibited almost no improvement in performance. This comparison provides grounds for supposing that the width of spiral belt layer 20 is preferably within a range of from 0.65L to 0.85L.

Examples 1-5 had about half the wear amount of the Comparative Example, and from this it may be understood that the amount of wear at a shoulder portion is suppressed in Examples 1-5. This effect was also present in Examples 6 and 7, but not to the same extent as in Examples 1-5. No substantial effect was exhibited in Comparative Example 1 or Comparative Example 2. The reduced amount of wear in the Examples is thought to be because, as described above, the frame member at the tread edge portion tends to stretch, the speed of a belt at the tread edge portion increases, and the difference in speed between a center side and a tread edge side decreases and, thereby, when traction is applied, slipping from a tread center side in a forward direction is suppressed.

## Claims

1. A pneumatic tire (10) for a two-wheeled vehicle, comprising:
a belt layer (16) and a tread portion (I8) sequentially arranged at an outer side in a tire radial direction of a crown portion (14C) of a carcass (14) formed from at least one layer and spanning toroidally between a left-and-right pair of bead cores (11), the belt layer (16) further comprising at least one spiral belt layer (20) formed by spirally winding a band-like rubber coated cord layer (21), which is formed from one cord or plural cords arranged in parallel embedded in a coating rubber, so as to form a cord angle in a range of from 0° to 5° relative to a tire circumferential direction, wherein:
when L is a tread surface distance in the tire width direction from a tire center to a tread edge, the spiral belt layer (20) is present only in a range up to a position from 0.65L to 0.85L from the tire center (CL); and
an intersecting belt ply (22) is present in at least a portion in a range from an edge portion in the tire width direction of the spiral belt layer (20) to the tread edge (T), the intersecting belt ply (22) consisting of belt layers comprising organic material fiber cords that intersect each other and have a cord angle of from 30° to less than 75° relative to the tire circumferential direction,
wherein, two pairs of left and right symmetrical intersecting belt layers (22A-22D) are provided at the inner side in the tire radial direction of the spiral belt layer (20), and respective outside ends in the tire width direction of the intersecting belt layers (22A-22D) are positioned further at the outer side in the tire width direction than the spiral belt layer (20).

2. The pneumatic tire (10) for a two-wheeled vehicle of claim 1, wherein a belt reinforcement layer (34) comprising organic material fiber cords having a cord angle in a range of from 85° to 90° relative to the tire circumferential direction and having a width of at least 90% of an entire tread width 2L, is provided between the spiral belt layer (20) and the tread portion (18).

3. The pneumatic tire for a two-wheeled vehicle of claim 1 or 2, wherein a cord member (48) comprising organic material fiber or steel cords having a cord angle in a range of from 0° to 20° relative to the tire circumferential direction is provided in a side wall portion in a range of from 20% to 100% of a height of the side wall portion (46).

## Patentansprüche

1. Ein Luftreifen (10) für ein zweirädriges Fahrzeug, umfassend:
eine Gurtschicht (16) und einen Laufstreifenabschnitt (18), die nacheinander an einer äußeren Seite in einer Reifenradialrichtung eines Kronenabschnitts (14C) einer Karkasse (14) angeordnet sind, die aus zumindest einer Schicht gebildet ist, und sich toroidal zwischen einem Rechts-und-links-Paar von Wulstkernen (11) spannt, wobei die Gurtschicht (16) weiterhin zumindest eine Spiralgurtschicht (20) umfasst, die durch spiralförmiges Wickeln einer bandähnlichen, gummibeschichteten Cord-Schicht (21) gebildet ist, die aus einem Cord oder einer Vielzahl von Corden gebildet ist, die parallel eingebettet in einem Beschichtungsgummi angeordnet sind, um einen Cord-Winkel im Bereich von O° bis 5° relativ zu einer Reifenumfangsrichtung zu bilden, wobei:
wenn L ein Laufstreifen-Oberflächenabstand in der Reifenbreitenrichtung von einem Reifenzentrum zu einer Laufstreifenkante ist, die Spiralgurtschicht nur in einem Bereich bis zu einer Position von 0,65 L bis 0,85 L von dem Reifenzentrum (CL) vorhanden ist; und
eine schneidende Gurtlage (22) in zumindest einem Abschnitt in einem Bereich von einem Kantenabschnitt in der Reifenbreitenrichtung der Spiralgurtschicht (20) zu der Laufstreifenkante (T) vorhanden ist, wobei die schneidende Gurtlage (22) aus Gurtlagen besteht, die Faser-Corde aus organischem Material umfassen, die einander schneiden und einen Cord-Winkel von 30° bis weniger als 75° relativ zu der Reifenumfangsrichtung aufweisen,
wobei zwei Paare linker und rechter symmetrischer, schneidender Gurtschichten (22A-22D) an der Innenseite in der Reifenradialrichtung der Spiralgurtschicht (20) vorgesehen sind, und entsprechende Außenseitenenden in der Reifenbreitenrichtung der schneidenden Gurtlagen (22A-22D) weiter an der Außenseite in der Reifenbreitenrichtung als die Spiralgurtschicht (20) angeordnet sind.

2. Luftreifen (10) für ein zweirädriges Fahrzeug nach Anspruch 1, wobei eine Gurtverstärkungsschicht (34), welche Faser-Corde aus einem organischen Material umfasst, einen Cord-Winkel in einem Bereich von 85° bis 90° relativ zu der Reifenumfangsrichtung aufweist, und eine Breite von zumindest 90% einer Gesamtlaufstreifenbreite 2L aufweist, und zwischen der Spiralgurtschicht (20) und dem Laufstreifenabschnitt (18) vorgesehen ist.

3. Luftreifen (10) für ein zweirädriges Fahrzeug nach Anspruch 1 oder 2, wobei ein Cord-Bauteil (48), welches Corde aus einer organischen Materialfaser oder Stahl umfasst, einen Cord-Winkel in einem Bereich von 0° bis 20° relativ zu der Reifenumfangsrichtung aufweist, und an einem Seitenwandabschnitt in einem Bereich von 20% bis 100% einer Höhe des Seitenwandabschnitts (46) vorgesehen ist.

## Revendications

1. Pneumatique (10) pour un véhicule à deux roues, comprenant :
une couche de ceinture (16) et une partie de bande de roulement (18) disposées en séquence d'un côté extérieur dans une direction radiale de pneumatique d'une partie de couronne (14C) d'une carcasse (14) formée à partir d'au moins une couche et s'étendant de façon toroïdale entre une paire de coeurs de talon gauche et droit (11), la couche de ceinture (16) comprenant de plus au moins une couche de ceinture en spirale (20) formée par l'enroulement en spirale d'une couche de câbles revêtus de caoutchouc en forme de bande (21), qui est constituée par un câble ou plusieurs câbles disposés en parallèle, incorporés dans un caoutchouc de revêtement, de façon à former un angle de câble situé dans une plage comprise entre 0° et 5° par rapport à une direction circonférentielle du pneumatique, dans lequel :
lorsque L est une distance de surface de bande de roulement dans la direction de la largeur du pneumatique d'un centre du pneumatique à un bord de la bande de roulement, la couche de ceinture en spirale (20) est présente uniquement dans une plage jusqu'à une position comprise entre 0,65L et 0,85L à partir du centre (CL) ; et
une nappe de ceinture en intersection (22) est présente dans au moins une partie dans une plage d'une partie de bord dans la direction de la largeur du pneumatique de la couche de ceinture en spirale (20) au bord de bande de roulement (T), la nappe de ceinture en intersection (22) étant constituée par des couches de ceinture comprenant des câbles de fibres de matière organique qui se croisent mutuellement et qui ont un angle de câble compris entre 30° et moins de 75° par rapport à la direction circonférentielle du pneumatique,
dans lequel deux paires de couches de ceinture se croisant de façon symétrique gauche et droite (22A à 22D) sont disposées du côté intérieur dans la direction radiale du pneumatique de la couche de ceinture en spirale (20), et des extrémités extérieures respectives dans la direction de la largeur du pneumatique des couches de ceinture se croisant (22A à 22D) sont positionnées davantage du côté extérieur dans la direction de la largeur du pneumatique que la couche de ceinture en spirale (20).

2. Pneumatique (10) pour un véhicule à deux roues selon la revendication 1, dans lequel une couche de renfort de ceinture (34) comprenant des câbles de fibres en matière organique ayant un angle de câble situé dans une plage comprise entre 85° et 90° par rapport à la direction circonférentielle du pneumatique et ayant une largeur d'au moins 90% d'une largeur totale de bande de roulement 2L, est disposée entre la couche de ceinture en spirale (20) et la partie de bande de roulement (18).

3. Pneumatique pour un véhicule à deux roues selon la revendication 1 ou 2, dans lequel un élément de câble (48) comprenant des câbles en acier ou en fibres en matière organique ayant un angle de câble situé dans une plage comprise entre 0° et 20° par rapport à la direction circonférentielle du pneumatique, est disposé dans une partie de paroi latérale située dans une plage comprise entre 20 % et 100 % d'une hauteur de la partie de paroi latérale (46).
